# EUROPÄISCHE PATENTSCHRIFT

(11) **EP 4 154 333 B1**
(45) Veröffentlichungstag und Bekanntmachung des Hinweises auf die Patenterteilung: **29.01.2025**
(21) Anmeldenummer: 21712131.8
(22) Anmeldetag: 12.03.2021
(51) Int. Cl.: H01M 4/88, H01M 8/122, H01M 8/124, H01M 8/12

(54) **VERFAHREN ZUR HERSTELLUNG EINER ELEKTROCHEMISCHEN ZELLE**
METHOD FOR PRODUCING AN ELECTROCHEMICAL CELL
PROCÉDÉ DE FABRICATION D'UNE CELLULE ÉLECTROCHIMIQUE

(30) Priorität: 18.05.2020 DE 102020206225
(43) Veröffentlichungstag der Anmeldung: 29.03.2023
(73) Patentinhaber: Robert Bosch GmbH, 70442 Stuttgart (DE)
(72) Erfinder: MAIER, Nicolas, 71272 Renningen (DE); KLEIN, Stefan, 71116 Gaertringen (DE)
(86) Internationale Anmeldenummer: PCT/EP2021/056294
(87) Internationale Veröffentlichungsnummer: WO 2021/233586

(56) Entgegenhaltungen:
- US-A- 5 290 642
- US-A1- 2004 083 589
- US-A1- 2005 048 356
- US-A1- 2006 008 696
- US-A1- 2006 210 706
- US-A1- 2017 237 103

## Beschreibung

### Stand der Technik

Es ist bereits ein Verfahren zur Herstellung einer elektrochemischen Zelle, insbesondere einer Festoxidbrennstoffzelle, vorgeschlagen worden, bei welchem in zumindest einem Verfahrensschritt zumindest eine Funktionsschicht der elektrochemischen Zelle und eine Elektrolytschicht der elektrochemischen Zelle aneinander angeordnet werden, wobei in zumindest einem Verfahrensschritt eine Kontaktfläche der Elektrolytschicht zu der Funktionsschicht strukturiert wird und wobei ein Strukturieren der Elektrolytschicht während eines zumindest teilweisen Kontakts der Elektrolytschicht mit der Funktionsschicht durchgeführt wird.

Beispielsweise offenbart US 2006/210706 A1 ein Verfahren, bei welchem eine Elektrolytschicht auf eine mit einem fotolithographischen Verfahren vorstrukturierte Anode aufgebracht wird.

US 2017/237103 A1 offenbart ein Verfahren, bei welchem die Funktionsschicht und die daran angeordnete Elektrolytschicht zusammen mit einem Wellenprofil versehen werden.

US 2004/083589 A1 offenbart ein Verfahren, bei welchem eine von der Elektrolytschicht abgewandte Seite der Funktionsschicht durch Aufbringen auf einen strukturierten Träger strukturiert wird.

US 2005/048356 A1 offenbart ein Verfahren, bei welchem eine Paste zur Bildung einer Elektrolytschicht auf eine mittels einer Gussform hergestellte vorstrukturierte Anode aufgebracht wird.

US 2006/008696 A1 offenbart ein Verfahren, bei welchem ein Elektrolyt auf eine Elektrode aufgebracht wird, welche mittels eines Vakuumbeschichtungsverfahrens hergestellt wird, in welchem ein Elektrodenmaterial auf eine strukturierte Maske aufgesprüht wird.

### Offenbarung der Erfindung

Die Erfindung geht aus von einem Verfahren zur Herstellung einer elektrochemischen Zelle, insbesondere einer Festoxidbrennstoffzelle, wobei in zumindest einem Verfahrensschritt zumindest eine Funktionsschicht der elektrochemischen Zelle und eine Elektrolytschicht der elektrochemischen Zelle aneinander angeordnet werden, wobei in zumindest einem Verfahrensschritt eine Kontaktfläche der Elektrolytschicht zu der Funktionsschicht strukturiert wird und wobei ein Strukturieren der Elektrolytschicht während eines zumindest teilweisen Kontakts der Elektrolytschicht mit der Funktionsschicht durchgeführt wird, wobei während des Strukturierens die Elektrolytschicht zumindest im Wesentlichen parallel zu einer Schichtungsrichtung der elektrochemischen Zelle an der Funktionsschicht aufgebracht wird.

Es wird vorgeschlagen, dass die Funktionsschicht vorstrukturiert wird, indem ein Umformungswerkzeug, insbesondere eine Pressform, zumindest im Wesentlichen parallel zu der Schichtungsrichtung mit einer Kraft beaufschlagt wird und die Elektrolytschicht zu dem Strukturieren auf der vorstrukturierten Funktionsschicht mittels eines Vakuumbeschichtungsverfahrens und/oder eines chemischen Beschichtungsverfahrens aufgebracht wird.

Unter einer "elektrochemischen Zelle" soll insbesondere zumindest ein Teil, insbesondere eine Unterbaugruppe, einer Brennstoffzelle und/oder einer Elektrolysezelle verstanden werden. Insbesondere kann die elektrochemische Zelle auch die gesamte Brennstoffzelle oder die gesamte Elektrolysezelle umfassen. Vorzugsweise ist die elektrochemische Zelle zumindest als ein Teil einer Hochtemperaturbrennstoffzelle, insbesondere einer Festoxidbrennstoffzelle, kurz SOFC, und/oder als ein Teil einer Hochtemperaturelektrolysezelle, kurz SOEC, ausgebildet.

Die Funktionsschicht kann insbesondere homogen ausgebildet sein oder aus mehreren unterschiedlichen Einzelschichten aufgebaut werden. Insbesondere umfasst die Funktionsschicht als Hauptschicht zumindest entweder eine Brennstoffelektrode oder eine Luftelektrode. Vorzugsweise ist die Hauptschicht zumindest 1 µm, bevorzugt zumindest 5 µm, stark, insbesondere parallel zur Schichtungsrichtung. Vorzugsweise ist die Hauptschicht höchstens 200 µm, bevorzugt höchstens 100 µm stark, insbesondere parallel zur Schichtungsrichtung. Optional umfasst die elektrochemische Zelle eine weitere Funktionsschicht. Vorzugsweise umfasst die Funktionsschicht eine Brennstoffelektrode und die weitere Funktionsschicht eine Luftelektrode als Hauptschicht. Alternativ umfasst die Funktionsschicht die Luftelektrode und die weitere Funktionsschicht die Brennstoffelektrode als Hauptschicht. Optional umfasst die Funktionsschicht und/oder die weitere Funktionsschicht zusätzlich eine Gasbarriere, eine Diffusionsbarriere, eine Reaktionssperrschicht, einen Elektronenblocker, einen Oxidationsschutz oder eine weitere, dem Fachmann als sinnvoll erscheinende Zusatzschicht. Vorzugsweise ist eine Zusatzschicht zwischen 0,05 und 50 µm, bevorzugt zwischen 0,1 und 2 µm stark, insbesondere parallel zur Schichtungsrichtung. Vorzugsweise werden/wird die Funktionsschicht und/oder die weitere Funktionsschicht aus einem keramischen Material gefertigt. Vorzugsweise soll unter "keramisch" ein Material verstanden werden, dass zumindest zu 25 Vol.-%, bevorzugt zumindest zu 50 Vol.-%, aus einer Keramik besteht. Insbesondere kann ein keramisches Material auch als ein eine Keramik umfassender Verbundwerkstoff, wie ein Cermet, ausgebildet sein.

Vorzugsweise wird in zumindest einem Verfahrensschritt des Verfahrens eine, insbesondere zähflüssige oder dünnflüssige, Paste verwendet, aus welcher die Funktionsschicht, insbesondere zumindest deren Hauptschicht, geformt wird. Vorzugsweise umfasst die Paste zumindest ein keramisches Pulver, welches insbesondere einen größten Massenanteil der Funktionsschicht bildet. Beispielsweise basiert das keramische Pulver auf Yttrium-stabilisiertem Zirconiumdioxid (YSZ), auf Scandium-stabilisierten Zirconiumdioxid (ScSZ), auf mit einem Seltenerdmetall dotiertem Cerdioxid, insbesondere auf Gadolinium-dotiertem Cerdioxid (CGO), auf einer perowskitischen Struktur wie Lanthan-Strontium-Kobalt-Ferrit (LSCF), Lanthan-Strontium-Kobalt-Oxid (LSC), Lanthan-Strontium-Mangan-Oxid (LSM) oder Lanthan-Strontium-Ferrit (LSF), auf einer Kombination der genannten Materialien oder auf einem anderen, dem Fachmann als sinnvoll erscheinenden keramischen Material zur Herstellung der Funktionsschicht. Es ist denkbar, dass die Paste, insbesondere zusätzlich, ein Metallpulver oder ein Metalloxidpulver wie Nickel oder Nickeloxid umfasst. Vorzugsweise umfasst die Paste zumindest ein, insbesondere organisches, Bindemittel, beispielsweise Polyvinylbutyral, Ethylcellulose, Methylcellulose, ein Acrylat, Polyvinylacetat oder dergleichen. Vorzugsweise umfasst die Paste zumindest ein Lösemittel, beispielsweise Kohlensäureester, ein Ether, Wasser, Alkohol oder dergleichen. Optional umfasst die Paste zumindest ein Additiv, beispielsweise einen Dispergator, einen Weichmacher, einen Entschäumer oder dergleichen. Vorzugsweise ist die Paste als Siebdruckpaste, Schablonendruckpaste und/oder Foliengusspaste ausgebildet. Vorzugsweise wird in zumindest dem Aufbringungsschritt die Paste beispielsweise in einem Siebdruckprozess, einem Schablonendruckprozess, einem Foliengießprozess oder dergleichen, auf ein Trägerelement der elektrochemischen Zelle zur Bildung der Funktionsschicht aufgebracht und anschließend zumindest teilweise getrocknet. Vorzugsweise werden Einzelschichten der Funktionsschicht in aufeinander folgenden Prozessschritten jeweils einzeln aufeinander angeordnet. Optional wird die Funktionsschicht teilweise oder vollständig, insbesondere mittels eines der genannten Prozesse, auf ein Transfersubstrat, beispielsweise einer Polymerfolie, Papier oder dergleichen, aufgebracht, zumindest teilweise getrocknet und in einem nachfolgenden Prozessschritt auf das Trägerelement übertragen, insbesondere auf laminiert, beispielsweise mittels einer Axialpresse oder einem Kalander. Insbesondere wird in analoger Weise für die weitere Funktionsschicht eine, insbesondere von der Paste unterschiedliche, weitere Paste hergestellt, welche in analoger Weise auf der Elektrolytschicht aufgebracht wird. Unter einer "Schichtungsrichtung" soll insbesondere ein auf einer der Funktionsschicht zugewandten Oberfläche des Trägerelements senkrecht stehender Vektor verstanden werden. Besonders bevorzugt ist die der Funktionsschicht zugewandte Oberfläche des Trägerelements eben ausgebildet. Insbesondere weist die Funktionsschicht, insbesondere die Einzelschichten der Funktionsschicht, und die Elektrolytschicht entlang der Schichtungsrichtung eine eindeutige räumliche Schicht-Reihenfolge auf. Insbesondere ist die Schicht-Reihenfolge zumindest Trägerelement, Funktionsschicht, Elektrolytschicht und optional zumindest eine weitere Funktionsschicht. Vorzugsweise erstreckt sich eine Haupterstreckungsebene der Funktionsschicht, insbesondere jeder entsprechenden Einzelschicht, der weiteren Funktionsschicht, insbesondere jeder entsprechenden Einzelschicht, und eine Haupterstreckungsebene der Elektrolytschicht in einem fertiggestellten Zustand der elektrochemischen Zelle zumindest im Wesentlichen senkrecht zu der Schichtungsrichtung. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Vorzugsweise wird die Kontaktfläche bei dem Strukturieren mit zumindest einem Strukturelement, bevorzugt mit einer Vielzahl an Strukturelementen, wie Rillen und Stege, insbesondere mit dreieckigem, viereckigem, sinus- oder halbkreisförmigem Profil, oder Noppen, Stiften, Pyramiden oder dergleichen versehen. Bevorzugt sind die Strukturelemente in einem regelmäßigen oder unregelmäßigen Muster angeordnet. Vorzugsweise wird die Funktionsschicht in komplementärer Weise zu der Elektrolytschicht strukturiert, sodass die zumindest im Wesentlichen gesamte Kontaktfläche, insbesondere einschließlich einer Oberfläche der Strukturelemente, an der Funktionsschicht anliegt, insbesondere ohne Beachtung einer Porosität der Funktionsschicht. Unter "im Wesentlichen gesamt" soll insbesondere zumindest zu 50 %, bevorzugt zumindest zu 75°%, besonders bevorzugt zumindest zu 99%, verstanden werden. Die Elektrolytschicht wird insbesondere in einem aufbauenden Prozess direkt mit den Strukturelementen an der Funktionsschicht erstellt und nicht nach einem ebenen Schichtaufbau an der Funktionsschicht umgeformt. Beispielsweise wird bei dem Strukturieren ein Elektrolytmaterial zur Bildung der Elektrolytschicht, insbesondere der Kontaktfläche, zumindest im Wesentlichen parallel zu der Schichtungsrichtung auf die Funktionsfläche beschleunigt, insbesondere aufgesprüht, aufgedampft, aufgestrahlt oder dergleichen. Bei dem Strukturieren wird ein Umformungswerkzeug, insbesondere eine Pressform, zumindest im Wesentlichen parallel zu der Schichtungsrichtung mit einer Kraft beaufschlagt. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere wird zur gleichen Zeit die im Wesentlichen gesamte Kontaktfläche strukturiert, insbesondere aufgebracht. Vorzugsweise wird die Elektrolytschicht bezüglich Schichtdicke, Porosität und/oder Anordnung von Strukturelementen homogen erstellt. Insbesondere werden die Strukturelemente über die im Wesentlichen gesamte Kontaktfläche, insbesondere regelmäßig, verteilt. Vorzugsweise wird die im Wesentlichen gesamte Elektrolytschicht mit einer gleichmäßigen Schichtdicke aufgetragen.

Durch die erfindungsgemäße Ausgestaltung des Verfahrens kann insbesondere eine vorteilhaft dünne und/oder vorteilhaft homogene Elektrolytschicht erreicht werden. Insbesondere kann eine elektrochemische Zelle mit einer strukturierten Elektrolytschicht hergestellt werden, welche vorteilhaft geringe ohmsche Verluste während eines Betriebs der elektrochemischen Zelle aufweist, insbesondere auch bei Betriebstemperaturen von weniger als 750°C. Insbesondere kann während eines Betriebs der elektrochemischen Zelle durch eine homogene Elektrolytschicht eine vorteilhaft homogene ionische Leitfähigkeit und eine vorteilhaft homogene elektrische Stromdichte erzielt werden. Insbesondere kann durch eine homogene Elektrolytschicht ein Risiko eines Auftretens von lokal konzentrierten Spitzenwerten für die Stromdichte vorteilhaft gering gehalten werden. Insbesondere kann eine lokal auftretende vorzeitige Zellalterung, insbesondere durch das Auftreten von lokal konzentrierten Spitzenwerten für die Stromdichte, vorteilhaft gering gehalten werden. Weiterhin kann das Verfahren zur Massenproduktion vorteilhaft einfach skaliert werden. Insbesondere können Kosten für ein skaliertes Verfahren vorteilhaft gering gehalten werden.

Vorzugsweise wird die Funktionsschicht vor einem Aufbringen der Elektrolytschicht vorstrukturiert. Beispielsweise wird die Funktionsschicht mittels einer Pressform, welche insbesondere zumindest im Wesentlichen parallel zu der Schichtungsrichtung mit einer Kraft beaufschlagt wird, vorstrukturiert. Beispielsweise ist die Pressform als mikrostrukturierte Platte, Folie oder Walze aus Metall oder Keramik ausgebildet, wobei eine mikrostrukturierte Oberfläche der Pressform beispielsweise mittels Micromachining oder einem Ätzverfahren hergestellt wurde. Alternativ ist die Pressform als Polymerfolie ausgebildet, wobei eine mikrostrukturierte Oberfläche der Pressform beispielsweise mittels Prägen oder Nanoprägelithografie hergestellt wurde. Vorzugsweise wird die Pressform, beispielsweise mittels einer Axialpresse, einem Kalander, einer isostatischen Presse oder dergleichen, in die Funktionsschicht gepresst. Alternativ weist das Transfersubstrat eine Vorstrukturierung auf, sodass die Funktionsschicht bei einer Übertragung von dem Transfersubstrat auf das Trägerelement, insbesondere ohne weiteren Pressvorgang, vorstrukturiert wird. Vorzugsweise wird die vorstrukturierte Funktionsschicht vor einem Aufbringen der Elektrolytschicht ausgehärtet, insbesondere durch einen Sinterprozess. In einer nicht-erfindungsgemäßen Alternative wird die ebene Funktionsschicht zusammen mit der Elektrolytschicht in einem einzelnen Pressvorgang strukturiert und anschließend ausgehärtet. Optional wird die ebene Funktionsschicht vor einem Aufbringen der Elektrolytschicht zu einer Stabilisierung teilweise ausgehärtet. Durch die erfindungsgemäße Ausgestaltung kann die Elektrolytschicht mit einer vorteilhaft geringen und insbesondere vorteilhaft homogenen Schichtstärke auf die Funktionsschicht aufgebracht werden. Insbesondere kann die Elektrolytschicht beim Strukturieren durch die Funktionsschicht vorteilhaft stabilisiert werden.

Vorzugsweise wird die Elektrolytschicht mittels physikalischer Gasphasenabscheidung (PVD) oder mittels chemischer Gasphasenabscheidung (CVD) als Vakuumbeschichtungsverfahren auf der Funktionsschicht aufgebracht. Vorzugsweise wird die Elektrolytschicht aus einem Material basierend auf stabilisiertem Zirconiumdioxid, insbesondere YSZ oder ScSZ, oder basierend auf mit einem Seltenerdmetall dotiertem Cerdioxid, insbesondere CGO, aufgebaut. Beispielsweise wird die Elektrolytschicht mit reaktivem Magnetronsputtern, insbesondere mittels Gleichstrom-Gasentladung und einem metallischen Target, auf die vorstrukturierte Funktionsschicht aufgebracht. Beispielsweise umfasst das metallische Target eine Legierung mit 15-25 %ₐₜ Yttrium oder Scandium in Zirkonium und/oder eine Legierung mit 10-20 %ₐₜ Gadolinium in Cer. Vorzugsweise wird das Vakuumbeschichtungsverfahren bei einem Sauerstoff-Partialdruck durchgeführt, bei welchem gerade noch eine Oxidabscheidung anstatt einer Metallabscheidung gewährleistbar ist. Vorzugsweise werden Bedingungen für die Oxidabscheidung mittels optischer Emissionsspektrometrie (OES) und/oder mittels Rückkopplung des Sauerstoff-Partialdrucks zur Sputterspannungssteuerung stabilisiert. Alternativ wird Material für die Elektrolytschicht in metallischer Form, beispielsweise als Zirkonium-Yttrium, als Zirkonium-Scandium oder als Cer-Gadolinium, auf die Funktionsschicht aufgebracht und anschließend in Luft beheizt, um die entsprechenden Oxide zu bilden. Besonders bevorzugt wird als Vakuumbeschichtungsverfahren Hochleistungsimpulsmagnetronsputtern (Hi-PIMS) verwendet, wobei insbesondere das Trägerelement mit einer Spannung relativ zu dem Target beaufschlagt wird. Alternativ kann als Vakuumbeschichtungsverfahren Gasflusssputtern (GFS), plasmaunterstützte Elektronstrahlverdampfung (EBPVD), Hochfrequenzsputtern, Laserstrahlverdampfen (PLD) von einem keramischen Target, metallorganische CVD (MOCVD), plasmaunterstützte CVD (PECVD, auch: PACVD), Laser-CVD (LCVD), Atomlagenabscheidung (ALD) oder ein anderes, dem Fachmann sinnvoll erscheinendes Verfahren verwendet werden. Insbesondere können chemische Beschichtungsverfahren, insbesondere CVD oder ALD, in einem Vakuum, bei Unterdruck oder bei atmosphärischem Druck durchgeführt werden. Optional wird zumindest eine zusätzliche Einzelschicht der Funktionsschicht oder der weiteren Funktionsschicht der elektrochemischen Zelle mit einem der genannten Vakuumbeschichtungsverfahren und/oder chemischen Beschichtungsverfahren auf die Hauptschicht der Funktionsschicht oder auf die Elektrolytschicht aufgebracht. Zum Beispiel wird auf eine Elektrolytschicht aus YSZ eine zusätzliche Einzelschicht aus CGO aufgebracht, insbesondere wenn die Hauptschicht der weiteren Funktionsschicht aus LSCF oder einem anderen Material, welches eine chemische Reaktivität mit YSZ aufweist, aufgebaut ist. Durch die erfindungsgemäße Ausgestaltung kann die Elektrolytschicht als eine vorteilhaft oberflächentreue Beschichtung der, insbesondere vorstrukturierten, Funktionsschicht hergestellt werden. Insbesondere kann die Schichtstärke der Elektrolytschicht vorteilhaft homogen aufgebaut werden. Insbesondere kann ein Ausmaß der Schichtstärke vorteilhaft zuverlässig kontrolliert werden. Insbesondere können vorteilhaft geringe Schichtstärken erreicht werden.

Weiterhin wird vorgeschlagen, dass die Elektrolytschicht mit einer Schichtstärke auf die Funktionsschicht aufgebracht wird, welche kleiner ist als eine maximale Höhenerstreckung eines, insbesondere des zumindest einen bereits genannten, Strukturelements der Kontaktfläche parallel zu der Schichtungsrichtung der elektrochemischen Zelle. Vorzugsweise weist die Elektrolytschicht eine weitere Kontaktfläche auf, welche insbesondere zu einem Kontakt mit der weiteren Funktionsschicht vorgesehen ist. Vorzugsweise verlaufen die Kontaktfläche und die weitere Kontaktfläche zumindest im Wesentlichen parallel zueinander. Insbesondere weist die weitere Kontaktfläche für jedes Strukturelement der Kontaktfläche ein gegensätzliches Strukturelement auf. Die Schichtstärke bezeichnet insbesondere den kleinsten Abstand der Kontaktfläche von der weiteren Kontaktfläche und insbesondere den kleinsten Abstand des Strukturelements von dem ihm zugeordneten gegensätzlichen Strukturelement der weiteren Kontaktfläche. Vorzugsweise wird die Elektrolytschicht mit einer maximalen Schichtstärke von weniger als 20 µm, bevorzugt weniger als 10 µm, besonders bevorzugt weniger als 5 µm, aufgetragen. Vorzugsweise wird die Elektrolytschicht mit einer minimalen Schichtstärke von mehr als 100 nm, bevorzugt mehr als 300 nm, besonders bevorzugt mehr als 1 µm, aufgetragen. Vorzugsweise wird das zumindest eine Strukturelement mit einer minimalen Höhenerstreckung und/oder einer minimalen Breite von zumindest 500 nm, bevorzugt von mehr als 1000 nm, besonders bevorzugt von mehr als 5 µm, erstellt. Vorzugsweise wird das zumindest eine Strukturelement mit einer maximalen Höhenerstreckung und/oder einer maximalen Breite von höchstens 100 µm, bevorzugt von weniger als 50 µm, besonders bevorzugt von weniger als 20 µm, erstellt. Unter einer "Breite" eines Strukturelements soll insbesondere eine maximale Erstreckung des Strukturelements in einer Richtung senkrecht zur Schichtungsrichtung verstanden werden. Vorzugsweise ist eine maximale Erstreckung des Strukturelements zumindest so groß wie die Breite. Optional erstreckt sich das Strukturelement in einer Richtung senkrecht zu seiner Höhenerstreckung und seiner Breite über eine im Wesentlichen gesamte maximale Erstreckung der Kontaktfläche in diese Richtung. Vorzugsweise sind alle Strukturelemente der Kontaktfläche zumindest im Wesentlichen gleich groß und/oder gleich breit, insbesondere sind Abweichungen paralleler Erstreckungen je zweier Strukturelemente kleiner als 50 %, bevorzugt kleiner 25 %. Alternativ wird die Kontaktfläche mit zumindest zwei unterschiedlich ausgestalteten Strukturelementen versehen, wobei die Elektrolytschicht mit einer Schichtstärke auf die Funktionsschicht aufgebracht wird, welche zumindest kleiner ist als eine maximale Höhenerstreckung des größten Strukturelements, insbesondere aller Strukturelemente. Durch die erfindungsgemäße Ausgestaltung kann eine vorteilhaft große Kontaktfläche erreicht werden. Insbesondere kann bei einem Betrieb der elektrochemischen Zelle eine vorteilhaft hohe Leistungsdichte erreicht werden.

Des Weiteren wird vorgeschlagen, dass die Funktionsschicht und die Elektrolytschicht, insbesondere bezüglich der Schichtungsrichtung, flach strukturiert werden. Insbesondere ist der Elektrolytschicht zumindest ein gedachter Quellpunkt auf einer Geraden zuordenbar, welche parallel zur Schichtungsrichtung verläuft und durch einen geometrischen Mittelpunkt der Elektrolytschicht verläuft. Vorzugsweise sind in einem strukturierten Zustand der Elektrolytschicht von dem Quellpunkt aus zumindest im Wesentlichen alle Punkte der Kontaktfläche mit je einer gedachten geraden Linie, welche keinen Schnittpunkt mit der Funktionsschicht aufweist, erreichbar. Unter "im Wesentlichen alle" Objekte soll insbesondere zumindest 90 %, besonders bevorzugt zumindest 95 %, besonders bevorzugt mehr als 99°%, aller Objekte verstanden werden. Insbesondere hat die Kontaktfläche, insbesondere bezüglich des Quellpunkts, keine geometrischen Schatten. Insbesondere ist die Kontaktfläche, insbesondere bezüglich des Quellpunkts, hinterschneidungsfrei. Vorzugsweise ist die Breite des Strukturelements größer als die maximale Höhenerstreckung des Strukturelements. Vorzugsweise sind alle elektrolytschichtseitigen, und optional zusätzlich alle funktionsschichtseitigen, Winkel der Kontaktfläche stumpf oder überstumpf. Vorzugsweise sind Strukturelemente der Elektrolytschicht kantenfrei oder mit abgerundet oder gefasten Kanten versehen. Durch die erfindungsgemäße Ausgestaltung kann eine vorteilhaft vollflächige Beschichtung mit einer homogen Schichtstärke erzielt werden. Insbesondere kann ein Risiko von Defekten bei einem Pressvorgang vorteilhaft gering gehalten werden.

Darüber hinaus wird vorgeschlagen, dass in zumindest einem Verfahrensschritt des Verfahrens die Funktionsschicht an einem, insbesondere dem bereits genannten, Trägerelement der elektrochemischen Zelle angeordnet wird und in einem nachgelagerten Verfahrensschritt des Verfahrens die Elektrolytschicht an der Funktionsschicht angeordnet wird. Vorzugsweise ist ein optionaler Verfahrensschritt des Verfahrens zur Anordnung der weiteren Funktionsschicht an der Elektrolytschicht dem Verfahrensschritt zur Anordnung der Elektrolytschicht an der Funktionsschicht nachgelagert. Beispielsweise ist das Trägerelement als poröser Metallträger, insbesondere Stahlträger, ausgebildet. Unter "porös" soll insbesondere gasdurchlässig verstanden werden. Insbesondere weist das Trägerelement materialfreie Strukturen wie etwa Poren, Löcher, Ausnehmungen, Kanäle, Schächte oder dergleichen auf und/oder ist gitterartig, geflechtartig oder schwammartig ausgebildet, um eine Gasleitung durch und/oder entlang des Trägerelements zu ermöglichen. Beispielsweise ist das Trägerelement als Metallschaum, als Streckmetall, als Metallgitter, als porös gesintertes Metall, als Metallplatte mit gebohrten oder geätzten Ausnehmungen oder dergleichen ausgebildet. Beispielsweise ist das Trägerelement als gesinterter oder ungesinterter Keramikträger ausgebildet. Insbesondere wird der Keramikträger durch Folienguss, Schablonendruck, Siebdruck oder Spritzguss hergestellt. Beispielsweise ist das Trägerelement als gesinterter oder ungesinterter Anodenträger ausgebildet. Insbesondere wird der Anodenträger durch Folienguss, Schablonendruck, Siebdruck oder Spritzguss hergestellt. Vorzugsweise wird der Anodenträger aus Nickeloxid-YSZ, Nickeloxid-CGO, Nickel-YSZ oder Nickel-CGO hergestellt. Es ist auch denkbar, dass zwischen dem Trägerelement und der Hauptschicht der Funktionsschicht zumindest eine Zusatzschicht, insbesondere eine Korrosionsschutzschicht und/oder eine Diffusionsbarriere, auf das Trägerelement aufgebracht wird. Durch die erfindungsgemäße Ausgestaltung kann die Elektrolytschicht mit einer vorteilhaft geringen und insbesondere vorteilhaft homogenen Schichtstärke auf die Funktionsschicht aufgebracht werden. Insbesondere kann die Elektrolytschicht beim Strukturieren durch die Funktionsschicht vorteilhaft stabilisiert werden.

Ferner wird vorgeschlagen, dass zu einer Strukturierung der Elektrolytschicht und/oder einer Vorstrukturierung der Funktionsschicht die Elektrolytschicht und/oder die Funktionsschicht beheizt werden. Vorzugsweise wird zumindest die Funktionsschicht mit einer Presskraft beaufschlagt, um die Vorstrukturierung der Funktionsschicht oder die Strukturierung der Elektrolytschicht durchzuführen. Vorzugsweise wird die Funktionsschicht vor einem Beaufschlagen mit der Presskraft beheizt, so dass während eines Pressvorgangs die Funktionsschicht und optional die Elektrolytschicht eine Temperatur von zumindest 50°C aufweisen. Vorzugsweise wird die Funktionsschicht zu einem Pressen maximal bis 300°C, bevorzugt bis maximal 150°C beheizt. Durch die erfindungsgemäße Ausgestaltung können das Bindemittel oder andere Zusätze zu der Paste vorteilhaft erweicht wird. Insbesondere kann eine vorteilhaft hohe Verformbarkeit der Funktionsschicht erreicht werden. Insbesondere kann die Vorstrukturierung oder die Strukturierung mit vorteilhaft geringer Presskraft durchgeführt werden.

Weiter wird vorgeschlagen, dass die Elektrolytschicht aus Partikeln aufgebaut wird, deren durchschnittliche Korngröße höchstens im zweistelligen Nanometerbereich liegt. Insbesondere wird die durchschnittliche Korngröße mittels einer Vermessung eines Querschnitts der fertiggestellten elektrochemischen Zellen mit einem Elektronenmikroskop, insbesondere einem Rasterelektronenmikroskop (REM), ermittelt. Vorzugsweise ist die durchschnittliche Korngröße zumindest kleiner als 100 nm, bevorzugt kleiner als 70 nm, besonders bevorzugt kleiner als 50 nm. Vorzugsweise ist die durchschnittliche Korngröße zumindest größer als 0,5 nm, bevorzugt größer als 1 nm, besonders bevorzugt größer als 2 nm. Vorzugsweise weist die Elektrolytschicht aus den Partikeln aufgebaute säulenförmige, insbesondere gasdichte, Mikrostrukturen auf, welche sich insbesondere zumindest im Wesentlichen parallel zu der Schichtungsrichtung erstrecken. Alternativ bilden die Schichten eine polykristalline oder amorphe Mikrostruktur aus. Durch die erfindungsgemäße Ausgestaltung kann ein Risiko lokal auftretender Stromdichtespitzen weiter vorteilhaft gesenkt werden.

Weiterhin wird eine elektrochemische Zelle, insbesondere eine Festoxidbrennstoffzelle, welche mit einem erfindungsgemäßen Verfahren hergestellt wird, vorgeschlagen. Insbesondere umfasst die elektrochemische Zelle das Trägerelement. Die elektrochemische Zelle umfasst insbesondere die Funktionsschicht. Optional weist die Funktionsschicht an einer der Kontaktfläche zugewandten Seite eine, insbesondere durch einen Pressvorgang, verdichtete Lage mit einer Rohdichte auf, die größer ist als die durchschnittliche Rohdichte der Funktionsschicht. Insbesondere ist die Funktionsschicht, insbesondere die Hauptschicht der Funktionsschicht, porös ausgebildet. Vorzugsweise umfasst die elektrochemische Zelle die Elektrolytschicht. Insbesondere weist die Elektrolytschicht eine homogene Schichtstärke auf. Insbesondere ist eine Schwankung der Schichtstärke der Elektrolytschicht zumindest an einander entsprechenden Stellen gleich ausgebildeter Strukturelemente, bevorzugt der gesamten Elektrolytschicht, geringer als 10 %, bevorzugt geringer als 5 %, besonders bevorzugt geringer als 1 % der Schichtstärke, insbesondere bei einer Vermessung eines Querschnitts der fertiggestellten elektrochemischen Zellen mit einem Elektronenmikroskop, insbesondere einem Rasterelektronenmikroskop (REM). Insbesondere ist die Elektrolytschicht gasdicht. Optional umfasst die elektrochemische Zelle die weitere Funktionsschicht. Insbesondere ist die weitere Funktionsschicht, zumindest die Hauptschicht der weiteren Funktionsschicht, porös ausgebildet. Durch die erfindungsgemäße Ausgestaltung kann eine vorteilhaft dünne elektrochemische Zelle mit einer vorteilhaft hohen Leistungsdichte und mit einer vorteilhaften langen Lebensdauer bereitgestellt werden.

Das erfindungsgemäße Verfahren und/oder die erfindungsgemäße elektrochemische Zelle sollen/soll hierbei nicht auf die oben beschriebene Anwendung und Ausführungsform beschränkt sein. Insbesondere können/kann das erfindungsgemäße Verfahren und/oder die erfindungsgemäße elektrochemische Zelle zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Verfahrens und
- Fig. 2: eine schematische Darstellung eines nicht-erfindungsgemäßen Verfahrens.

### Beschreibung der Ausführungsbeispiele

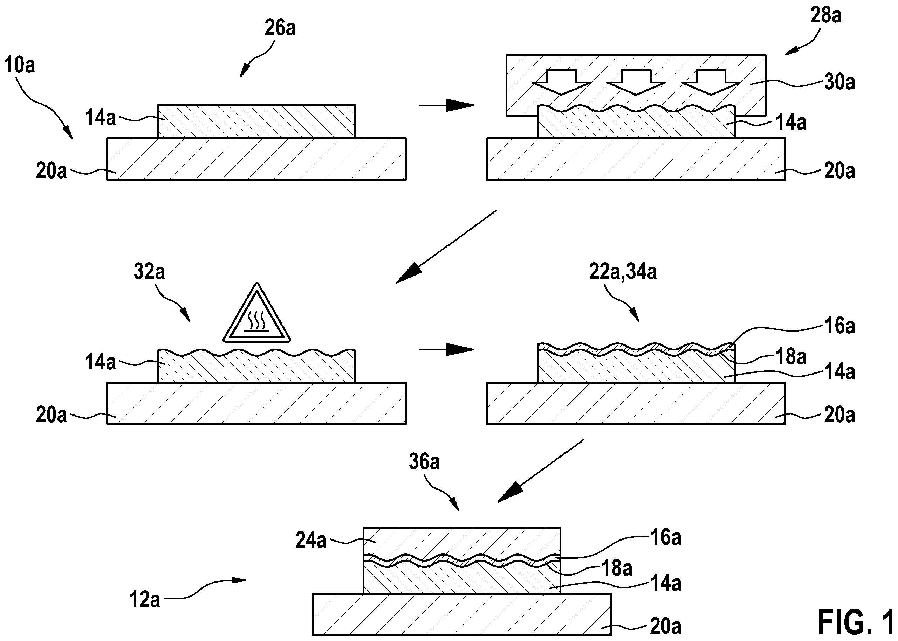

Figur 1 zeigt ein Verfahren 10a zur Herstellung einer elektrochemischen Zelle 12a. Insbesondere ist die elektrochemische Zelle 12a als Festoxidbrennstoffzelle ausgebildet. Die elektrochemische Zelle 12a umfasst insbesondere ein Trägerelement 20a. Die elektrochemische Zelle 12a umfasst eine Funktionsschicht 14a. Die elektrochemische Zelle 12a umfasst eine Elektrolytschicht 16a. Optional umfasst die elektrochemische Zelle 12a eine weitere Funktionsschicht 24a. Beispielsweise umfasst die Funktionsschicht 14a als eine Hauptschicht insbesondere eine Brennstoffelektrode und insbesondere die weitere Funktionsschicht 24a eine Luftelektrode. Vorzugsweise weist die elektrochemische Zelle 12a eine Schichtungsrichtung auf. Vorzugsweise ist die weitere Funktionsschicht 24a an der Elektrolytschicht 16a angeordnet. Vorzugsweise ist die Elektrolytschicht 16a an der Funktionsschicht 14a angeordnet. Vorzugsweise ist die Funktionsschicht 14a an dem Trägerelement 20a angeordnet.

Das Verfahren 10a umfasst insbesondere einen Funktionsschichtaufbringungsschritt 26a. Das Verfahren 10a umfasst insbesondere einen Vorstrukturierungsschritt 28a. Das Verfahren 10a umfasst insbesondere einen Temperaturbehandlungsschritt 32a. Vorzugsweise umfasst das Verfahren 10a einen Elektrolytaufbringschritt 34a. Das Verfahren 10a umfasst insbesondere einen Strukturierungsschritt 22a. Vorzugsweise umfasst das Verfahren 10a zumindest einen weiteren Funktionsschichtaufbringungsschritt 36a.

In dem Funktionsschichtaufbringungsschritt 26a wird die Funktionsschicht 14a an dem Trägerelement 20a der elektrochemischen Zelle 12a angeordnet. Vorzugsweise ist das Trägerelement 20a porös, insbesondere gasdurchlässig, ausgebildet. Das Trägerelement 20a kann insbesondere metallisch oder keramisch ausgebildet sein. Vorzugsweise wird die Funktionsschicht 14a in einem pastenförmigen Zustand oder als dünnflüssige Masse auf das Trägerelement 20a aufgebracht und vorzugsweise zumindest teilweise getrocknet. Die Funktionsschicht 14a wird insbesondere direkt auf das Trägerelement 20a aufgebracht. Alternativ wird die Funktionsschicht 14a zunächst auf ein Transfersubstrat aufgebracht, insbesondere zumindest teilweise getrocknet und anschließend auf das Trägerelement 20a übertragen.

In dem Vorstrukturierungsschritt 28a wird die Funktionsschicht 14a mittels einer Pressform 30a vorstrukturiert, welche insbesondere mit einer Presskraft zumindest im Wesentlichen senkrecht zu einer Schichtungsrichtung beaufschlagt wird. Die Schichtungsrichtung steht insbesondere zumindest im Wesentlichen senkrecht auf einer Haupterstreckungsebene des Trägerelements 20a. In dem Vorstrukturierungsschritt 28a wird zu der Vorstrukturierung der Funktionsschicht 14a die Funktionsschicht 14a beheizt. Die Funktionsschicht 14a wird flach vorstrukturiert.

In dem Temperaturbehandlungsschritt 32a wird zu einer Festigung, zu einer Erreichung einer Zielporosität und/oder zu einer Vernetzung ursprünglich pulverförmiger Partikel der Funktionsschicht 14a, insbesondere vor dem Elektrolytaufbringschritt 34a, die Funktionsschicht 14a beheizt. Insbesondere wird in dem Temperaturbehandlungsschritt 32a die Funktionsschicht 14a zusammen mit dem Trägerelement 20a gesintert. Vorzugsweise wird die Funktionsschicht 14a bei einer Temperatur von mehr als 1000 C, optional mehr als 1400°C, gesintert. Vorzugsweise wird die Funktionsschicht 14a an Luft, alternativ in Inertgas, insbesondere Argon, oder in reduzierter Atmosphäre, insbesondere in Formiergas oder Wasserstoff, gesintert.

In dem dem Funktionsschichtaufbringungsschritt 26a nachgelagerten Elektrolytaufbringschritt 34a wird die Elektrolytschicht 16a an der Funktionsschicht 14a angeordnet. Ein Strukturieren der Elektrolytschicht 16a wird während eines zumindest teilweisen Kontakts der Elektrolytschicht 16a mit der Funktionsschicht 14a durchgeführt. Insbesondere werden bei dem Verfahren 10a der Elektrolytaufbringschritt 34a und der Strukturierungsschritt 22a gemeinsam ausgeführt. Während des Strukturierens wird die Elektrolytschicht 16a zumindest im Wesentlichen parallel zu einer Schichtungsrichtung der elektrochemischen Zelle 12a an der Funktionsschicht 14a aufgebracht. Die Elektrolytschicht 16a wird zu dem Strukturieren auf die vorstrukturierte Funktionsschicht 14a mittels eines Vakuumbeschichtungsverfahrens aufgebracht. In dem Strukturierungsschritt 22a wird eine Kontaktfläche 18a der Elektrolytschicht 16a zu der Funktionsschicht 14a strukturiert. Insbesondere wird die Vorstrukturierung der Funktionsschicht 14a oberflächentreu beschichtet. Eine maximale Schichtstärke der Elektrolytschicht 16a auf die Funktionsschicht 14a ist kleiner als eine maximale Höhenerstreckung eines Strukturelements der Kontaktfläche 18a parallel zu der Schichtungsrichtung der elektrochemischen Zelle 12a. Die Elektrolytschicht 16a wird flach strukturiert. Insbesondere weist die Elektrolytschicht 16a aufgrund einer Vielzahl an Strukturelementen ein wellenförmiges Profil auf.

Vorzugsweise wird nach dem Elektrolytaufbringschritt 34a in dem weiteren Funktionsschichtaufbringungsschritt 36a die weitere Funktionsschicht 24a der elektrochemischen Zelle 12a auf die Elektrolytschicht 16a aufgebracht.

Vorzugsweise wird in einem Abschlussschritt des Verfahrens 10a (hier nicht dargestellt) die elektrochemische Zelle 12a beheizt. Insbesondere wird die elektrochemische Zelle 12a in dem Abschlussschritt mit einer Temperatur zwischen 300°C und 400°C beaufschlagt, insbesondere in Luft. Alternativ wird in dem Abschlussschritt die elektrochemische Zelle 12a mit einer Temperatur von bis zu 600°C beaufschlagt. Optional wird in dem Abschlussschritt die elektrochemische Zelle 12a in einer speziellen Atmosphäre, insbesondere Argon, Stickstoff oder einer reduzierten Atmosphäre, beheizt. Optional wird die elektrochemische Zelle 12a in dem Abschlussschritt gesintert, insbesondere bei Temperaturen zwischen 800°C und 1200°C und insbesondere in Luft oder alternativ in Argon oder in sauerstoffarmer Atmosphäre.

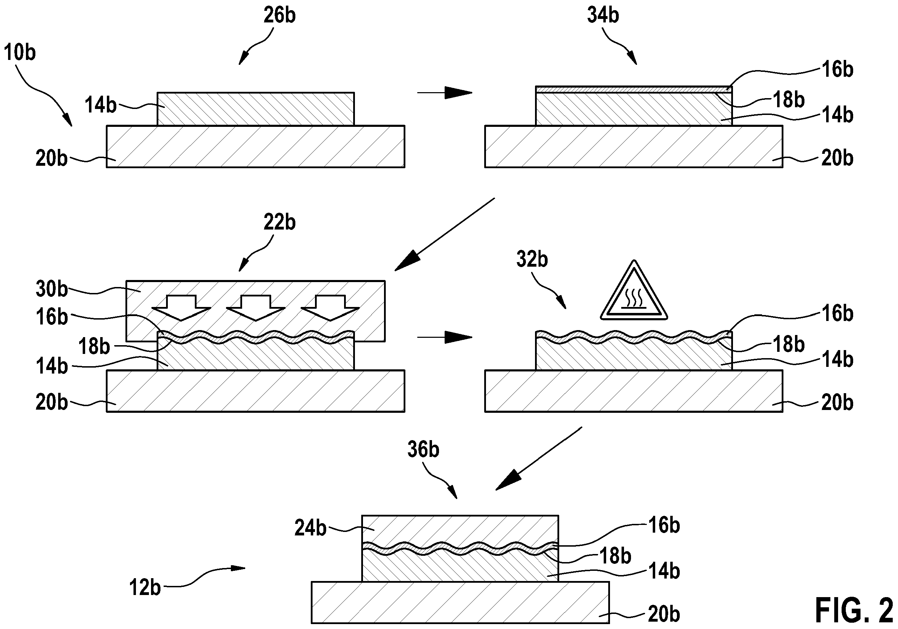

In der Figur 2 ist ein Ausführungsbeispiel eines nicht-erfindungsgemäßen Verfahrens gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figur 1, verwiesen werden kann. Zur Unterscheidung der Ausführungsbeispiele ist der Buchstabe a den Bezugszeichen des Ausführungsbeispiels in der Figur 1 nachgestellt. In dem Ausführungsbeispiel der Figur 2 ist der Buchstabe a durch den Buchstaben b ersetzt.

Figur 2 zeigt ein Verfahren 10b zur Herstellung einer elektrochemischen Zelle 12b. Insbesondere ist die elektrochemische Zelle 12b als Festoxidbrennstoffzelle ausgebildet. Das Verfahren 10b umfasst insbesondere einen Funktionsschichtaufbringungsschritt 26b. Vorzugsweise umfasst das Verfahren 10a einen Elektrolytaufbringschritt 34b. Das Verfahren 10b umfasst insbesondere einen Temperaturbehandlungsschritt 32b. Das Verfahren 10b umfasst einen Strukturierungsschritt 22b. Vorzugsweise umfasst das Verfahren 10b zumindest einen weiteren Funktionsschichtaufbringungsschritt 36b.

In dem Elektrolytaufbringschritt 34b wird zumindest eine Funktionsschicht 14b der elektrochemischen Zelle 12b und eine Elektrolytschicht 16b der elektrochemischen Zelle 12b aneinander angeordnet. In dem Elektrolytaufbringschritt 34b wird die Elektrolytschicht 16b insbesondere in einen ebenen Zustand der Kontaktfläche 18b auf die Funktionsschicht 14b aufgebracht. Insbesondere wird die Elektrolytschicht 16b in einem pastenförmigen Zustand auf die Funktionsschicht 14b aufgetragen, insbesondere mittels Siebdruck, Schablonendruck und/oder Folienguss und anschließend zumindest teilweise getrocknet.

In dem Strukturierungsschritt 22b wird eine Kontaktfläche 18b der Elektrolytschicht 16b zu der Funktionsschicht 14b strukturiert. Ein Strukturieren der Elektrolytschicht 16b wird während eines zumindest teilweisen Kontakts der Elektrolytschicht 16b mit der Funktionsschicht 14b durchgeführt. Während des Strukturierens wird die Elektrolytschicht 16b zumindest im Wesentlichen parallel zu einer Schichtungsrichtung der elektrochemischen Zelle 12b an der Funktionsschicht 14b umgeformt. Die Funktionsschicht 14b wird zusammen mit der Elektrolytschicht 16b strukturiert. In dem Strukturierungsschritt 22b wird die Funktionsschicht 14a zusammen mit der Elektrolytschicht 16b zu der Strukturierung der Elektrolytschicht 16b beheizt. In dem Strukturierungsschritt 22b wird die Elektrolytschicht 16b gemeinsam mit der Funktionsschicht 14b mittels einer Pressform 30b, welche zumindest im Wesentlichen parallel zu der Schichtungsrichtung mit einer Presskraft beaufschlagt wird, strukturiert, insbesondere umgeformt.

In dem Temperaturbehandlungsschritt 32b wird zu einer Festigung der Funktionsschicht 14b, insbesondere vor dem weiteren Funktionsschichtaufbringungsschritt 36b, die Funktionsschicht 14b zusammen mit der Elektrolytschicht 16b beheizt, insbesondere gesintert.

Hinsichtlich weiterer Merkmale und/oder Funktionen des Verfahrens 10b darf auf die Beschreibung der Figur 1 verwiesen werden.

## Patentansprüche

1. Verfahren zur Herstellung einer elektrochemischen Zelle, insbesondere einer Festoxidbrennstoffzelle, wobei in zumindest einem Verfahrensschritt zumindest eine Funktionsschicht (14a) der elektrochemischen Zelle und eine Elektrolytschicht (16a) der elektrochemischen Zelle aneinander angeordnet werden, wobei in zumindest einem Verfahrensschritt eine Kontaktfläche (18a) der Elektrolytschicht (16a) zu der Funktionsschicht (14a) strukturiert wird und wobei ein Strukturieren der Elektrolytschicht (16a) während eines zumindest teilweisen Kontakts der Elektrolytschicht (16a) mit der Funktionsschicht (14a) durchgeführt wird, wobei während des Strukturierens die Elektrolytschicht (16a) zumindest im Wesentlichen parallel zu einer Schichtungsrichtung der elektrochemischen Zelle an der Funktionsschicht (14a) aufgebracht wird, **dadurch gekennzeichnet, dass** die Funktionsschicht (14a) vorstrukturiert wird, indem ein Umformungswerkzeug, insbesondere eine Pressform, zumindest im Wesentlichen parallel zu der Schichtungsrichtung mit einer Kraft beaufschlagt wird und die Elektrolytschicht (16a) zu dem Strukturieren auf der vorstrukturierten Funktionsschicht (14a) mittels eines Vakuumbeschichtungsverfahrens und/oder eines chemischen Beschichtungsverfahrens aufgebracht wird.

2. Verfahren nach Anspruch 1, **dadurch gekennzeichnet, dass** die Elektrolytschicht (16a) mit einer Schichtstärke auf die Funktionsschicht (14a) aufgebracht wird, welche kleiner ist als eine maximale Höhenerstreckung eines Strukturelements der Kontaktfläche (18a) parallel zu der Schichtungsrichtung der elektrochemischen Zelle.

3. Verfahren nach einem der vorhergehenden Ansprüche, **dadurch gekennzeichnet, dass** die Funktionsschicht (14a) und die Elektrolytschicht (16a) flach strukturiert werden.

4. Verfahren nach einem der vorhergehenden Ansprüche, **dadurch gekennzeichnet, dass** in zumindest einem Verfahrensschritt die Funktionsschicht (14a) an einem Trägerelement (20a) der elektrochemischen Zelle angeordnet wird und in einem nachgelagerten Verfahrensschritt die Elektrolytschicht (16a) an der Funktionsschicht (14a) angeordnet wird.

5. Verfahren nach einem der vorhergehenden Ansprüche, **dadurch gekennzeichnet, dass** zu einer Strukturierung der Elektrolytschicht (16a) und/oder einer Vorstrukturierung der Funktionsschicht (14a) die Elektrolytschicht (16a) und/oder die Funktionsschicht (14a) beheizt werden.

6. Verfahren nach einem der vorhergehenden Ansprüche, **dadurch gekennzeichnet, dass** die Elektrolytschicht (16a) aus Partikeln aufgebaut wird, deren durchschnittliche Korngröße höchstens im zweistelligen Nanometerbereich liegt.

7. Elektrochemische Zelle, insbesondere Festoxidbrennstoffzelle, hergestellt mit einem Verfahren nach einem der vorhergehenden Ansprüche.

## Claims

1. Method for producing an electrochemical cell, in particular a solid oxide fuel cell, wherein, in at least one method step, at least one functional layer (14a) of the electrochemical cell and an electrolyte layer (16a) of the electrochemical cell are arranged against one another, wherein, in at least one method step, a contact area (18a) of the electrolyte layer (16a) with respect to the functional layer (14a) is structured, and wherein a structuring of the electrolyte layer (16a) is performed whilst the electrolyte layer (16a) is in at least partial contact with the functional layer (14a), wherein, during the structuring, the electrolyte layer (16a) is applied to the functional layer (14a) at least substantially parallel to a layering direction of the electrochemical cell, **characterized in that** the functional layer (14a) is pre-structured by a force being applied, substantially parallel to the layering direction, to a forming tool, in particular a press mould, and, for the structuring, the electrolyte layer (16a) is applied to the pre-structured functional layer (14a) by means of a vacuum depositing process and/or a chemical coating process.

2. Method according to Claim 1, **characterized in that** the electrolyte layer (16a) is applied to the functional layer (14a) with a layer thickness which is less than a maximum extent of the height of a structural element of the contact area (18a) parallel to the layering direction of the electrochemical cell.

3. Method according to one of the preceding claims, **characterized in that** the functional layer (14a) and the electrolyte layer (16a) are structured flat.

4. Method according to one of the preceding claims, **characterized in that**, in at least one method step, the functional layer (14a) is arranged on a carrier element (20a) of the electrochemical cell and, in a subsequent method step, the electrolyte layer (16a) is arranged on the functional layer (14a).

5. Method according to one of the preceding claims, **characterized in that**, for a structuring of the electrolyte layer (16a) and/or a pre-structuring of the functional layer (14a), the electrolyte layer (16a) and/or the functional layer (14a) are heated.

6. Method according to one of the preceding claims, **characterized in that** the electrolyte layer (16a) is built up from particles of an average grain size that is at most in the double-digit nanometre range.

7. Electrochemical cell, in particular solid oxide fuel cell, produced by a method according to one of the preceding claims.

## Revendications

1. Procédé de fabrication d'une pile électrochimique, en particulier d'une pile à combustible à oxyde solide, dans lequel, dans au moins une étape de procédé, au moins une couche fonctionnelle (14a) de la pile électrochimique et une couche électrolytique (16a) de la pile électrochimique sont agencées l'une sur l'autre, dans lequel, dans au moins une étape de procédé, une surface de contact (18a) de la couche électrolytique (16a) avec la couche fonctionnelle (14a) est structurée et dans lequel une structuration de la couche électrolytique (16a) est effectuée pendant un contact au moins partiel entre la couche électrolytique (16a) et la couche fonctionnelle (14a), dans lequel, pendant la structuration, la couche électrolytique (16a) est appliquée sur la couche fonctionnelle (14a) au moins de manière sensiblement parallèle à une direction de stratification de la pile électrochimique, **caractérisé en ce que** la couche fonctionnelle (14a) est préstructurée **en ce qu'**un outil de transformation, en particulier un moule de pressage, est sollicité par une force au moins de manière sensiblement parallèle à la direction de stratification, et la couche électrolytique (16a) est appliquée, pour la structuration, sur la couche fonctionnelle (14a) préstructurée au moyen d'un procédé de revêtement sous vide et/ou d'un procédé de revêtement chimique.

2. Procédé selon la revendication 1, **caractérisé en ce que** la couche électrolytique (16a) est appliquée sur la couche fonctionnelle (14a) à une épaisseur de couche qui est inférieure à une étendue maximale en hauteur d'un élément de structure de la surface de contact (18a), parallèlement à la direction de stratification de la pile électrochimique.

3. Procédé selon l'une des revendications précédentes, **caractérisé en ce que** la couche fonctionnelle (14a) et la couche électrolytique (16a) sont structurées à plat.

4. Procédé selon l'une des revendications précédentes, **caractérisé en ce que** dans au moins une étape de procédé, la couche fonctionnelle (14a) est agencée sur un élément support (20a) de la pile électrochimique et, dans une étape de procédé ultérieure, la couche électrolytique (16a) est agencée sur la couche fonctionnelle (14a).

5. Procédé selon l'une des revendications précédentes, **caractérisé en ce que**, pour une structuration de la couche électrolytique (16a) et/ou une préstruc-turation de la couche fonctionnelle (14a), la couche électrolytique (16a) et/ou la couche fonctionnelle (14a) est/sont chauffée(s).

6. Procédé selon l'une des revendications précédentes, **caractérisé en ce que** la couche électrolytique (16a) est formée à partir de particules dont la grosseur moyenne de grain se situe au plus dans la plage nanométrique à deux chiffres.

7. Pile électrochimique, en particulier pile à combustible à oxyde solide, fabriquée par un procédé selon l'une des revendications précédentes.
